# EUROPÄISCHE PATENTANMELDUNG

(11) **EP 3 453 934 A1**
(43) Veröffentlichungstag der Anmeldung: **13.03.2019**
(21) Anmeldenummer: 18192736.9
(22) Anmeldetag: 05.09.2018
(51) Int. Cl.: F16L 1/028, F16L 1/06, F16L 1/16, F16L 1/24, F16L 9/14, F16L 9/16, F16L 9/18, F16L 11/08, F16L 11/11, F16L 11/112, F16L 11/118, F16L 11/12

(54) **ROHRLEITUNG**

(30) Priorität: 12.09.2017 DE 102017216099
(71) Anmelder: Krah Pipes GmbH & Co. KG, 57520 Schutzbach (DE)
(72) Erfinder: Krah, Alexander, 57567 Daaden (DE)
(74) Vertreter: Grosse, Wolf-Dietrich Rüdiger

(57) **Zusammenfassung**

Die Erfindung betrifft eine Rohrleitung aus einem thermoplastischen Werkstoff zum Durchleiten von einem gasförmigen oder flüssigen Medium. Bei bekannten Rohrleitungen dieser Art ist deren rohrförmige Wandung gebildet durch eine rohrförmige Innenwand, welche an ihrer Außenseite einen spiralförmig angeordneten ersten Kanal trägt. Die einzelnen Windungen dieses ersten spiralförmigen Kanals weisen einen lichten axialen Abstand zueinander auf. Um solche Rohrleitungen nicht nur flexibel auszugestalten, sondern auch mit einem für eine Verlegung unter Wasser notwendigen Ballastmaterial ausstatten zu können, sieht die vorliegende Erfindung vor, dass die Rohrleitungen neben der Innenwand auch eine Außenwand aufweisen, welche in Bezug auf die Innenwand radial weiter außen und koaxial angeordnet ist und von dem ersten Kanal getragen wird. Zwischen der Au-ßenwand 130 und der Innenwand 110 ist nun die Ausbildung eines spiralförmigen Doppelkanals möglich, welcher neben dem ersten Kanal 120 auch einen zu dem ersten Kanal parallel geführten spiralförmigen zweiten Kanal aufweist.

## Beschreibung

Die Erfindung betrifft Rohrleitungen aus einem thermoplastischen Werkstoff zum Durchleiten von gasförmigen oder flüssigen Medien. Sie dienen z. B. als Meeresauslaufleitungen, als Kühlwasserleitungen oder als Leitungen, die unter bestimmten Auftriebsbedingungen, insbesondere unter Wasser verlegt werden müssen. Zu den letzteren Leitungen zählen z. B. Kanalrohre bei hohem Grundwasserstand. Die erfindungsgemäßen Rohre entsprechen der DIN 16961.

Die Europäische Patentschrift EP 2 179 206 B1 offenbart eine Rohrleitung aus Kunststoff mit einer doppelten Wandung, wobei der Hohlraum zwischen den beiden Wandungen mit einem Ballastmaterial, wie z. B. Beton, befüllt ist, ebenfalls um das Gewicht der Rohrleitung zu erhöhen und ein Aufschwimmen bei Verlegung unter Wasser zu verhindern. Die Befüllung des gesamten Hohlraums zwischen den beiden Wänden der Rohrleitung hat jedoch den Nachteil, dass die Rohrleitung nicht mehr so flexibel ist wie ohne Befüllung und insbesondere bei einer S-förmigen Verlegung leicht brechen kann.

Die deutsche Offenlegungsschrift DE 10 2013 111 970 A1 offenbart ein Verfahren zur Verlegung eines langen Rohrstrangs. Der Rohrstrang enthält eine Ballastierung, so dass er durch Fluten in einem Gewässer versenkt werden kann. Bei dem in der Offenlegungsschrift offenbarten Rohrstrang ist in dessen Wandung mindestens eine Hohlkammer hinein extrudiert, in die ein Ballaststoff einfüllbar ist. Die Hohlkammer verläuft in Längsrichtung des Rohrstrangs.

Aus der internationalen Patentanmeldung WO 2016 110509 A1 ist ein mehrkanaliger Schlauch bekannt, zur Anwendung als Wärmetauscher. Der Schlauch besteht aus einer ersten inneren Wand, die aus einem thermoplastischen oder elastomerischen Material gefertigt ist. Diese innerste Wand ist von einer zweiten Wand umgeben zwecks Verstärkung des Schlauches. Schließlich ist die Außenseite der zweiten Wand spiralförmig von einem Rohr umwickelt, durch welches eine Flüssigkeit geleitet werden kann.

Weiterhin sind im Stand der Technik Rohrleitungen mit lediglich einer rohrförmigen Innenwand bekannt, an deren Außenseite ein Kanal spiralförmig umlaufend angeordnet ist. Die einzelnen Windungen dieses spiralförmigen Kanals können ohne Abstand zueinander dicht nebeneinander liegend angeordnet sein oder sie weisen einen lichten Abstand zueinander auf; für letzteres Ausführungsbeispiel siehe beispielsweise die deutsche Gebrauchsmusterschrift DE 10 2008 017 571 U1 oder die deutsche Patentanmeldung DE 10 2008027 927 A1.

Gegenüber dem genannten Gebrauchsmuster grenzt sich der Patentanspruch 1 mit seinem Oberbegriff ab. Aufgrund des lichten Abstandes der peripheren Kanalwindungen sind die so ausgebildeten Rohrleitungen zwar relativ flexibel und damit auch für eine kurvige Verlegung geeignet; sie haben jedoch typischerweise eine zu geringe Dichte, um bei Verlegung unter Wasser nicht aufzuschwimmen.

Der Erfindung liegt die Aufgabe zugrunde, eine bekannte Rohrleitung, insbesondere aus einem thermoplastischen Werkstoff, so auszubilden, dass sie einerseits hinreichend flexibel ist für eine kurvige Verlegung und zum anderen in einfacher Weise mit Ballastmaterial befüllbar ist.

Diese Aufgabe wird durch den Gegenstand des Patentanspruchs 1 gelöst. Dieser ist dadurch gekennzeichnet, dass die Rohrleitung neben der Innenwand eine rohrförmige Außenwand aufweist, welche in Bezug auf die Innenwand radial weiter außen und koaxial angeordnet ist und von dem ersten Kanal getragen wird. Durch das Vorsehen der Außenwand wird zwischen der Innenwand und der Außenwand ein spiralförmiger Doppelkanal gebildet, welcher neben dem ersten Kanal auch einen zu dem ersten Kanal parallel geführten spiralförmigen zweiten Kanal aufweist, welcher durch zwei benachbarte axial zueinander beabstandete Windungen des ersten Kanals axial begrenzt ist.

Das erfindungsgemäße Vorsehen der Außenwand und die dadurch ermöglichte Ausbildung des spiralförmigen Doppelkanals zwischen der Innenwand und der Außenwand ermöglicht vorteilhafterweise eine gute Lösung der oben genannten Aufgabe, d. h. eine Realisierung der beiden gewünschten Eigenschaften, nämlich einer ausreichenden Flexibilität einerseits und einem ausreichend hohen Gewicht bzw. einer ausreichend hohen Dichte andererseits. Letzteres wird insbesondere dadurch realisiert, dass einer der Kanäle mit einem Ballastmaterial befüllt wird, wie weiter unten noch beschrieben wird.

Die besagte flexible Ausgestaltung ist eine gute Voraussetzung für eine Verlegung der Rohrleitung in "S"-Form. Dadurch ist ein Kostensenkungspotential von ca. 15 % gegeben und eine bessere Berechnung solcher Leitungen möglich. Im Vergleich zu anderen Lösungen ist die hier beanspruchte erfindungsgemäße Lösung sehr langlebig und umweltfreundlich. Die Verlegung der Rohrleitung in "S"-Form ist eine spezielle Variante zur Verlegung von flexiblen, insbesondere thermoplastischen Rohrleitungen in Gewässern.

Gemäß einem ersten Ausführungsbeispiel ist die Außenwand der Rohrleitung im Bereich des ersten Kanals zumindest stellenweise geöffnet oder sie weist zumindest eine vorzugsweise verschließbare Öffnung auf. Bei Verlegung der Rohrleitung unter Wasser gestattet die vorgesehene Öffnung das Eindringen von Wasser in den ersten Kanal, so dass sich dieser mit Wasser füllt. Die in dem ersten Kanal zuvor befindliche Luft wird dadurch herausgedrückt, wodurch sich der Auftrieb der Rohrleitung reduziert.

Der zweite Kanal ist vorzugsweise wasserdicht und / oder gasdicht ausgebildet. Dem steht nicht entgegen, dass die Außenwand im Bereich des zweiten Kanals eine verschließbare Öffnung zum Befüllen des zweiten Kanals mit einem Ballastmaterial aufweisen kann. Die verschließbare Öffnung sollte dann ihrerseits wasserdicht bzw. gasdicht sein. Durch die Befüllung des zweiten Kanals zumindest teilweise mit einem Ballastmaterial, z. B. Beton, Sand oder Wasser werden das Gewicht und die Dichte der Rohrleitung erhöht; dadurch wird verhindert, dass die Rohrleitung bei Verlegung unter Wasser aufschwimmt. Die wasserdichte bzw. gasdichte Ausbildung des zweiten Kanals hat den Vorteil, dass das Ballastmaterial seinerseits keinen Kontakt zu dem Wasser, beispielsweise zu dem die Rohrleitung umgebenden Salzwasser, hat und somit von dem Wasser nicht angegriffen werden kann und insbesondere nicht korrodieren kann. Die Befüllung des zweiten Kanals mit dem Ballastmaterial kann beispielsweise bereits bei der Produktion der Rohrleitung in einem Produktionswerk, nach der Produktion an Land, aber noch vor der Installation der Rohrleitung unter Wasser oder auch erst, wenn die Rohrleitung auf dem Wasser, z. B. dem Meer, einem See oder einem Fluss schwimmt.

Je nach Anwendungsfall bzw. nach der gewünschten Verlegung der Rohrleitung kann es vorteilhaft sein, dass das Volumen des zweiten Kanals zur Aufnahme des Ballastmaterials um ein Vielfaches größer ist als das Volumen des ersten Kanals; insbesondere zur Aufnahme einer hinreichend großen Menge an Ballastmaterial.

Insbesondere durch eine vollständige Befüllung des zweiten Kanals, auch Gewichtsspirale genannt, mit dem Ballastmaterial wird die Rohrleitung zumindest im Bereich des zweiten Kanals unflexibel. Bei der erfindungsgemäßen Ausbildung der Rohrleitung wird die gewünschte Flexibilität aber durch den vorzugsweise nicht befüllten ersten Kanal, auch Flexibilitätsspirale genannt, realisiert, welcher in dem erfindungsgemäßen Doppelkanal axial benachbart zu dem unflexiblen zweiten Kanal ausgebildet ist.

Weitere vorteilhafte Ausgestaltungen der Rohrleitung sind Gegenstand der abhängigen Ansprüche.

Der Beschreibung sind zwei Figuren beigefügt, welche jeweils unterschiedliche Ausführungsbeispiele für die erfindungsgemäße Rohrleitung in einem Querschnitt zeigen. Gezeigt ist insbesondere jeweils nur eine Hälfte der Rohrleitung mit weiter insbesondere der erfindungsgemäß ausgebildeten Wandung. In beiden Figuren sind gleiche technische Merkmale mit gleichen Bezugszeichen bezeichnet.

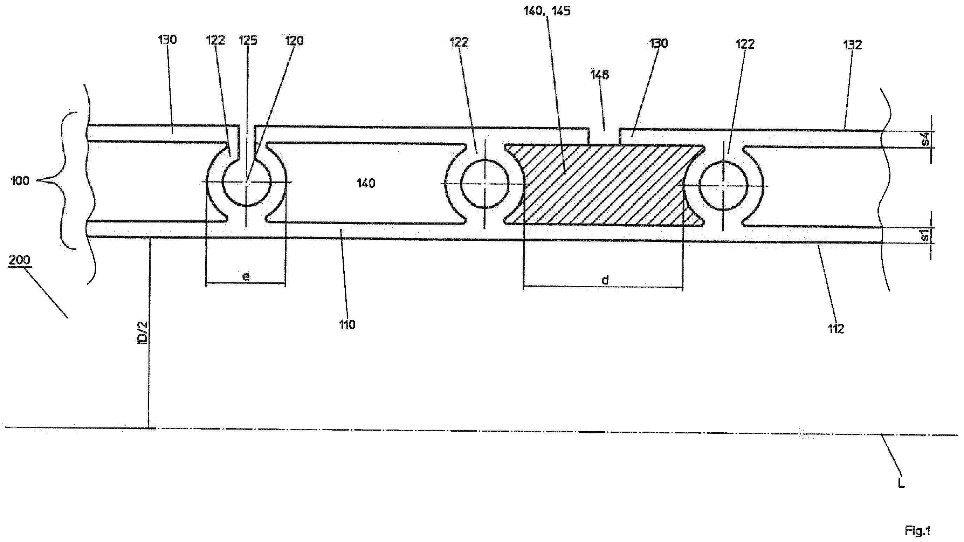

Figur 1 zeigt ein erstes Ausführungsbeispiel für die erfindungsgemäße Rohrleitung 200. Zu erkennen zunächst die Längsachse der Rohrleitung 200 mit dem Bezugszeichen L. Die Wandung 100 der Rohrleitung befindet sich in einem radialen Abstand ID/2 von der Längsachse L, wobei ID den Innendurchmesser der Rohrleitung bezeichnet. Die Wandung 100 besteht zunächst aus einer rohrförmigen Innenwand 110 mit einer vorzugsweise glatt ausgebildeten Innenseite 112. Die homogene Wandstärke der Innenwand 110 ist mit dem Bezugszeichen s1 bezeichnet; die homogene Wandstärke der Außenwand 130 auch Decklage genannt, ist mit dem Bezugszeichen s4 bezeichnet. Erfindungsgemäß weist die Wandung 100 neben der Innenwand 110 auch eine Außenwand 130 auf mit einer ebenfalls vorzugsweise glatt ausgebildeten Außenseite 132. Erfindungsgemäß ist zwischen der Außenwand 130 und der Innenwand 110 ein spiralförmiger Doppelkanal ausgebildet, bestehend aus einem ersten Kanal 120 und einem Kanal 140, welche axial nebeneinander angeordnet sind. Die spiralförmigen Windungen 122 des ersten Kanals sind mit einem lichten Abstand d axial zueinander beabstandet. Genau dieser lichte Abstand d definiert die Breite des zweiten Kanals 140. Für diesen lichten Abstand d gilt beispielsweise: 20 mm < d < 200 mm. Insofern ist der zweite Kanal 140 durch die beabstandeten Windungen 122 des ersten Kanals axial begrenzt. In radialer Richtung wird der zweite Kanal durch die Innenwand 110 und die Außenwand 130 begrenzt.

Für die Breite e des ersten Kanals 120, auch Flexibilitätskanal genannt, gilt beispielsweise: 40 mm < e < 200 mm.

Figur 1 zeigt auch die optional verschließbaren Öffnungen 125 in der Außenwand 130, welche eine fluidleitende Verbindung zwischen dem Hohlraum des ersten Kanals 120 und dem die Rohrleitung umgebenden Medium ermöglicht. Diese Öffnungen 125 können beispielsweise durch eine Lochung, Perforierung oder durch Schlitze in der Außenwand 130 gebildet sein. Bei Verlegung unter Wasser ermöglichen diese Öffnungen 125 das Eindringen von Wasser in den inneren Hohlraum des ersten Kanals 120, wodurch die zuvor darin befindliche Luft herausgedrückt wird und damit das Auftriebsverhalten der Rohrleitung insgesamt reduziert wird.

Figur 1 zeigt weiterhin eine verschließbare Öffnung 148 in der Außenwand 130 im Bereich des zweiten Kanals. Diese Öffnung dient zum Befüllen des zweiten Kanals mit einem Ballastmaterial 145, wie beispielsweise Beton, Sand, Wasser oder Ähnliches, wenn dieses nach der Herstellung des Rohres in den zweiten Kanal eingefüllt werden soll. Die Öffnung 148 sollte gas- bzw. wasserdicht verschließbar sein, um, wie gesagt, das Eindringen des Umgebungsmediums, insbesondere Wasser, weiter insbesondere Salzwasser, in das Innere des zweiten Kanals 140 und damit eine Zersetzung des Ballastmaterials 145 zu verhindern. Für den Fall, dass das Ballastmaterial bereits bei der Produktion der Rohrleitung in den zweiten Kanal mit eingebaut wird, ist die Öffnung 148 möglicherweise entbehrlich.

Die Innenwand, die Außenwand und / oder die Wände des ersten und / oder zweiten Kanals, vorzugsweise jedoch jeweils die gesamte Rohrleitung, ist aus einem thermoplastischen Werkstoff gebildet, beispielsweise Polyethylen oder Polypropylen.

Der zweite Kanal 140, auch Gewichtskanal genannt, hat vorzugsweise eine glatte Innenoberfläche, wodurch das Einbringen des Ballastmaterials erleichtert wird. Der erste Kanal kann ebenfalls eine glatte, alternativ jedoch auch eine raue oder corrugierte Innenoberfläche haben.

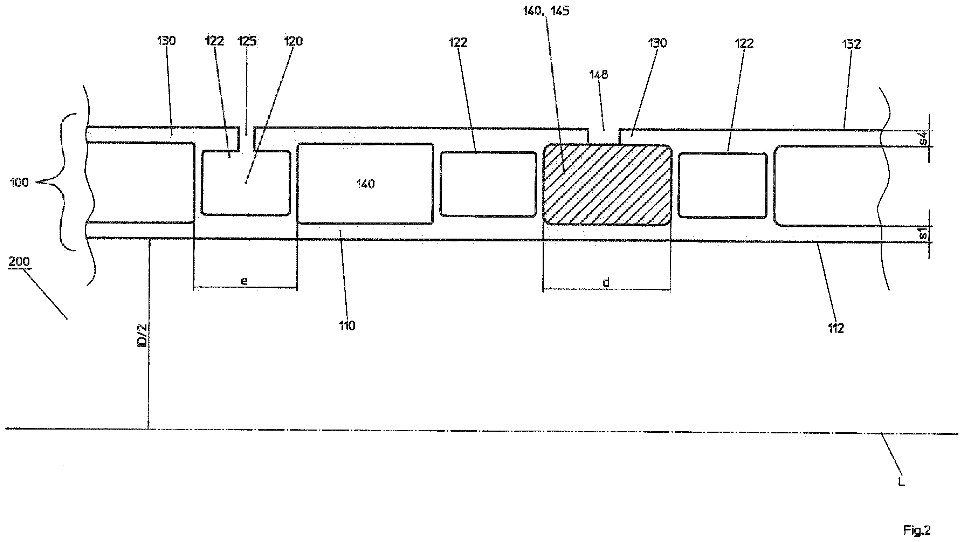

Figur 2 zeigt ein zweites Ausführungsbeispiel für die erfindungsgemäße Rohrleitung. Für dieses Ausführungsbeispiel gilt grundsätzlich dieselbe Beschreibung wie für die Figur 1.

Der einzige Unterschied zwischen den in den Figuren 1 und 2 gezeigten Ausführungsbeispielen besteht in den Querschnitten der Kanäle 120, 140. Während der erste Kanal 120 in Figur 1 beispielhaft einen runden Querschnitt aufweist, hat er in Figur 2 beispielhaft einen rechteckförmigen Querschnitt. Dementsprechend hat der zweite Kanal 140 jeweils auch einen anderen Querschnitt, insbesondere ist er durch den ersten Kanal 120 in axialer Richtung jeweils anders begrenzt.

Grundsätzlich können die Querschnitte der beiden Kanäle 120, 140 beliebig geometrisch geformt sein, z. B. kreisrund, elliptisch, rechteckig, trapezförmig etc.

**Bezugszeichen**
- 100: rohrförmige Wandung
- 110: Innenwand
- 112: Innenseite der Innenwand
- 120: erster Kanal (Flexibilitätskanal bzw. Flexibilitätsspirale)
- 122: einzelne Windung des ersten Kanals
- 125: Öffnung
- 130: Außenwand
- 132: Außenseite der Außenwand
- 140: zweiter Kanal (Gewichtskanal bzw. Gewichtsspirale)
- 145: Ballastmaterial
- 148: Öffnung
- 200: Rohrleitung

- d: lichter Abstand zwischen zwei benachbarten Windungen des ersten Kanals (= Breite des zweiten Kanals)
- e: Breite des ersten Kanals
- ID: Innendurchmesser der Rohrleitung
- s1: homogene Wandstärke der Innenwand
- s4: homogene Wandstärke der Außenwand

- L: Längsachse der Rohrleitung

## Patentansprüche

1. Rohrleitung (200) zum Durchleiten von einem gasförmigen oder flüssigen Medium, wobei die Rohrleitung gebildet ist durch eine rohrförmige Wandung (100), zumindest weitgehend gefertigt aus einem thermoplastischen Werkstoff, wobei die Wandung aufweist:
eine rohrförmige Innenwand (110);
einen an der Außenseite der Innenwand spiralförmig angeordneten ersten Kanal (120), dessen einzelne Windungen (122) mit einem lichten Abstand d axial zueinander beabstandet sind;
wobei die Wandung (100) weiterhin **gekennzeichnet ist durch** eine in Bezug auf die Innenwand radial weiter außen und koaxial angeordnete und von dem ersten Kanal getragene rohrförmige Außenwand (130) zur Ausbildung eines spiralförmigen Doppelkanals zwischen der Innenwand (110) und der Außenwand (130), wobei der Doppelkanal neben dem ersten Kanal (120) auch einen zu dem ersten Kanal parallel geführten spiralförmigen zweiten Kanal (140) aufweist, welcher durch zwei der benachbarten axial beabstandeten Windungen (122) des ersten Kanals (120) axial begrenzt ist.

2. Rohrleitung (200) nach Anspruch 1,
**dadurch gekennzeichnet,**
**dass** die Außenwand (130) im Bereich des ersten Kanals (120) zumindest stellenweise geöffnet ist oder mindestens eine optional verschließbare Öffnung (125) aufweist.

3. Rohrleitung (200) nach einem der vorangegangenen Ansprüche,
**dadurch gekennzeichnet,**
**dass** der zweite Kanal wasserdicht und/oder gasdicht ausgebildet ist.

4. Rohrleitung (200) nach Anspruch 3,
**dadurch gekennzeichnet,**
**dass** der zweite Kanal zumindest teilweise mit einem Ballastmaterial (145), z. B. Beton, Sand oder Wasser gefüllt ist.

5. Rohrleitung (200) nach Anspruch 3 oder 4,
**gekennzeichnet durch**
mindestens eine verschließbare Öffnung (148) in der Außenwand im Bereich des zweiten Kanals (140) zum Befüllen des zweiten Kanals mit dem Ballastmaterial (145).

6. Rohrleitung (200) nach einem der vorangegangenen Ansprüche,
**dadurch gekennzeichnet,**
**dass** Volumen des zweiten Kanals (140) um ein Vielfaches größer ist als das Volumen des ersten Kanals (120).

7. Rohrleitung (200) nach einem der vorangegangenen Ansprüche,
**dadurch gekennzeichnet,**
**dass** die Innenseite (112) der Innenwand (110) der Rohrleitung und/oder die Oberfläche der Innenseite des zweiten Kanals (140) glatt ausgebildet ist.

8. Rohrleitung (200) nach einem der vorangegangenen Ansprüche,
**dadurch gekennzeichnet,**
**dass** die Außenseite (132) der Außenwand (130) der Rohrleitung und/oder die Oberfläche der Innenseite des ersten Kanals (120) glatt oder corrugiert ausgebildet ist.

9. Rohrleitung (200) nach einem der vorangegangenen Ansprüche,
**dadurch gekennzeichnet,**
**dass** für den lichten Abstand d zwischen zwei benachbarten Wandungen des ersten Kanals (120) gilt: 20 mm < d < 200 mm.

10. Rohrleitung (200) nach einem der vorangegangenen Ansprüche,
**dadurch gekennzeichnet,**
**dass** für den Innendurchmesser ID der Rohrleitung gilt: 300 mm < ID < 500 mm.
